(19) Europäisches Patentamt
European Patent Office
Office européen des brevets

(11) EP 0 690 672 B1

(12) EUROPÄISCHE PATENTSCHRIFT

(45) Veröffentlichungstag und Bekanntmachung des Hinweises auf die Patenterteilung:
**23.10.1996 Patentblatt 1996/43**

(21) Anmeldenummer: **94911144.7**

(22) Anmeldetag: **10.03.1994**

(51) Int. Cl.$^6$: **A01N 37/50**
// (A01N37/50, 55:00, 47:38, 43:84, 43:653, 43:50, 43:40)

(86) Internationale Anmeldenummer:
**PCT/EP94/00741**

(87) Internationale Veröffentlichungsnummer:
**WO 94/21123 (29.09.1994 Gazette 1994/22)**

(54) **FUNGIZIDE MISCHUNG**
FUNGICIDAL MIXTURE
MELANGE FONGICIDE

(84) Benannte Vertragsstaaten:
**AT BE CH DE DK ES FR GB GR IE IT LI NL PT SE**

(30) Priorität: **23.03.1993 DE 4309272**

(43) Veröffentlichungstag der Anmeldung:
**10.01.1996 Patentblatt 1996/02**

(73) Patentinhaber: **BASF Aktiengesellschaft**
**67063 Ludwigshafen (DE)**

(72) Erfinder:
- **SAUR, Reinhold**
  **D-67459 Boehl-Iggelheim (DE)**
- **HAMPEL, Manfred**
  **D-67435 Neustadt (DE)**
- **SCHELBERGER, Klaus**
  **D-67161 Goennheim (DE)**
- **AMMERMANN, Eberhard**
  **D-64646 Heppenheim (DE)**
- **LORENZ, Gisela**
  **D-67434 Neustadt (DE)**

(56) Entgegenhaltungen:
**EP-A- 0 524 496** **EP-A- 0 531 837**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 690 672 B1

Printed by Rank Xerox (UK) Business Services
2.13.8/3.4

## Beschreibung

Die vorliegende Erfindung betrifft fungizide Mischungen mit synergistischer fungizider Wirkung und Verfahren zur Bekämpfung von Pilzen mit diesen Mischungen.

Es ist bekannt, α-Methoximino-2-[(2-methylphenoxy)-methyl]-phenylessigsäuremethylester

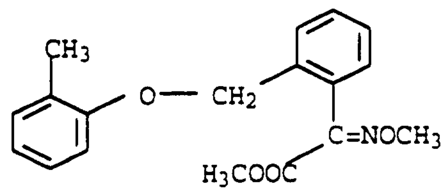

als Fungizid zu verwenden (EP 253 213). Es ist ferner bekannt, den Wirkstoff 4-(2-Methyl-3-[4-tert.-butylphenyl]-propyl)-2,6-dimethylmorpholin

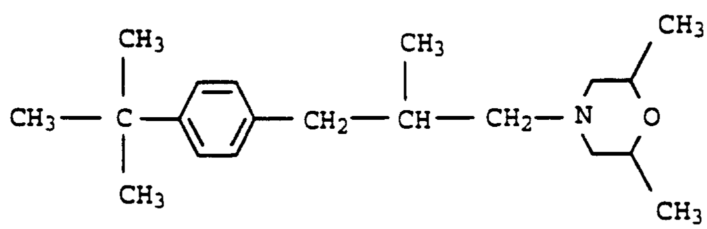

oder den Wirkstoff Tridemorph oder den Wirkstoff Fenpropidin oder deren Salze als Fungizide zu verwenden (DE 26 56 747).

Es ist ferner bekannt, N-propyl-N-[2,4,6-trichlorophenoxy)-ethyl]imidazol-1-carboxamid

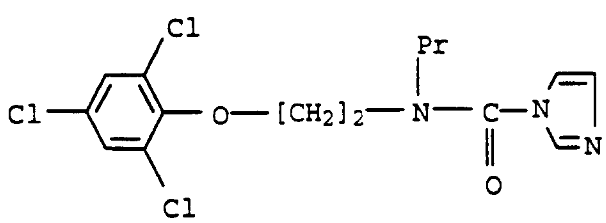

als Fungizid zu verwenden (EP 72 156).

Es sind ferner zahlreiche Azolwirkstoffe mit fungizider Wirkung bekannt, nämlich (Z)-2-(1,2,4-Triazol-1-ylmethyl)-2-(4-fluorphenyl)-3- (2-chlorphenyl)-oxiran der Formel

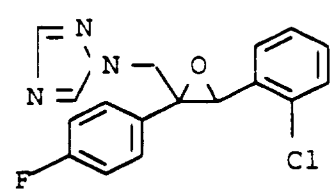

1-Butyl-1-(2,4-dichlorphenyl)-2-(1,2,4-triazol-1-yl)-ethanol (common name Hexaconazole), 1-[(2-Chlorphenyl)methyl]-1-(1,1-dimethyl)-2-(1,2,4-triazol-1-yl-ethanol, 1-(4-Fluorphenyl)-1-(2-fluorphenyl)-2-(1,2,4-triazol-1-yl)-ethanol (common name Flutriafol), (RS)-4- (4-Chlorphenyl)-2-phenyl-2-(1H-1,2,4-triazol-1-ylmethyl)-butyronitril, 1-[(2 RS, 4 RS; 2 RS, 4 SR)-4-Brom-2- (2,4-dichlorphenyl)-tetrahydrofurfuryl]-1H-1,2,4-triazol, 3-(2,4-Dichlorphenyl)-2-(1H-1,2,4-triazol-1-yl)-quinazolin-4(3H)-on, (RS)-2,2-Dimethyl- 3-(2-chlorbenzyl)-4- (1H-1,2,4-triazol-1-yl)-butan-3-ol, Bitertanol, Triadimefon, Triadimenol, Cyproconazole, Dichlobutrazol, Difenoconazole, Diniconazole, Etaconazole, Propiconazole, Flusilazole, Tebuconazole, Imazalil, Penconazole, Tetraconazole oder einem Salz eines solchen Azolwirkstoffs.

Es wurde nun gefunden, daß eine Mischung aus

a) α-Methoximino-2-[(2-methylphenoxy)-methyl]-phenylessigsäure-methylester und

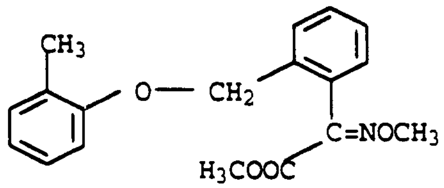

b) 4-(2-Methyl-3-[4-tert.-butylphenyl]-propyl)-2,6-dimethylmorpholin (Fenpropimorph)

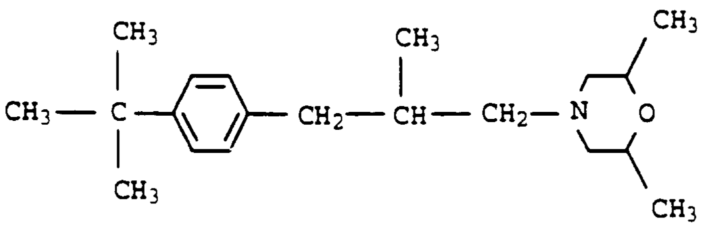

oder dem Wirkstoff Tridemorph oder dem Wirkstoff Fenpropidin und

c) einem Azolwirkstoff ausgewählt aus der folgenden Gruppe
N-propyl-N-[2,4,6-trichlorophenoxy)ethyl]imidazol-1-carboxamid

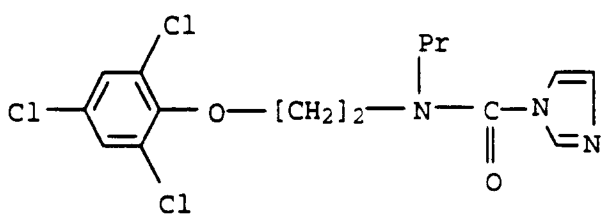

,

(Z)-2-(1,2,4-Triazol-1-ylmethyl)-2-(4-fluorphenyl)-3-(2-chlorphenyl)-oxiran der Formel

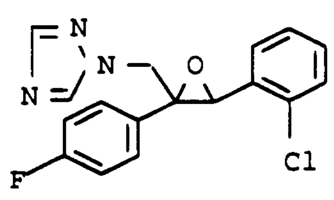

1-Butyl-1-(2,4-dichlorphenyl)-2-(1,2,4-triazol-1-yl)-ethanol (common name Hexaconazole), 1-[(2-Chlorphenyl)methyl]-1-(1,1-dimethyl)-2-(1,2,4-triazol-1-yl-ethanol, 1-(4-Fluorphenyl)-1-(2- fluorphenyl)-2-(1,2,4-triazol-1-yl)-ethanol (common name Flutriafol), (RS)-4-(4-Chlorphenyl)-2-phenyl-2-(1H-1,2,4-triazol-1-ylmethyl)-butyronitril, 1-[(2 RS, 4 RS; 2 RS, 4 SR)-4-Brom-2-(2,4-dichlorphenyl)-tetrahydrofurfuryl]-1H-1,2,4-triazol, 3-(2,4-Dichlorphenyl)-2-(1H-1,2,4-triazol-1-yl)-quinazolin-4(3H)-on, (RS)-2,2-Dimethyl- 3-(2-chlorbenzyl)-4-(1H-1,2,4-triazol-1-yl)-butan-3-ol, Bitertanol, Triadimefon, Triadimenol, Cyproconazole, Dichlobutrazol, Difenoconazole, Diniconazole, Etaconazole, Propiconazole, Flusilazole, Tebuconazole, Imazalil, Penconazole, Tetraconazole oder einem Salz eines solchen Azolwirkstoffs.

eine synergistische fungizide Wirkung hat. Das Mischungsverhältnis (Gewichtsverhältnis) der Verbindungen a), b) und c) wird so gewählt, daß eine synergistische fungizide Wirkung auftritt, beispielsweise Verbindung a) : Verbindung b) : Verbindung c) wie 10 bis 1 : 10 bis 1 : 10 bis 1, beispielsweise 5 bis 1 : 5 bis 1 : 5 bis 1, insbesondere 3 bis 1 : 3 bis 1 : 3 bis 1, vorzugsweise 2 bis 1 : 2 bis 1 : 2 bis 1. Das Mischungsverhältnis umfaßt beispielsweise die Mischungen a):b):c) wie 10:1:1 bis 1:10:1 bis 1:1:10. Die synergistische Wirkung der Mischung zeigt sich darin, daß die fungizide Wirkung der Mischung a) + b) + c) größer ist als die Summe der fungiziden Wirkungen von a) und von b) und von c).

Die Komponente a), kann hinsichtlich der -C=N-Doppelbindung in zwei stereoisomeren Formen vorliegen. Bevorzugt ist das (E)-Isomere.

Die Erfindung umfaßt Mischungen, die die reinen Isomeren der Verbindung a) enthalten, insbesondere das (E)-Isomere, als auch Mischungen, die Gemische der Isomeren enthalten.

Die Komponente Fenpropimorph kann in zwei stereoisomeren Formen (Morpholinring) vorliegen, wobei das cis-Isomere bevorzugt wird.

Die Erfindung umfaßt Mischungen, die die reinen Isomeren der Verbindung Fenpropimorph enthalten, insbesondere das cis-Isomere, und Mischungen, die Gemische der Isomeren enthalten.

Bevorzugt werden solche Mischungen, die die Komponente a) überwiegend in Form des (E)-Isomeren enthalten und gleichzeitig die Komponente b) überwiegend als cis-Isomer.

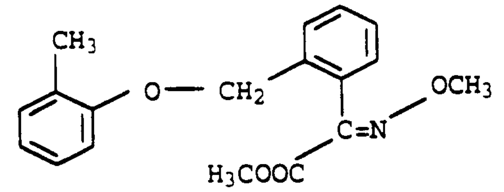

a, (E)-Isomer

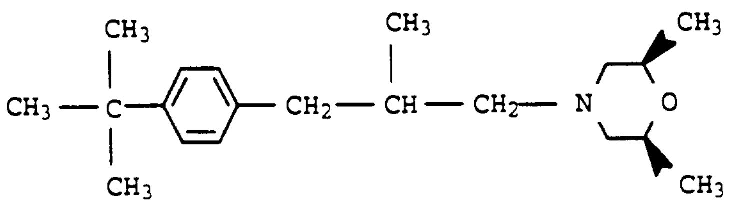

b, cis-Isomer

Der Wirkstoff Fenpropimorph b) kann auch in Form seiner Salze vorliegen. Auch diese Mischungen werden von der Erfindung umfaßt.

Salze werden hergestellt durch Umsetzung mit Säuren z.B. Halogenwasserstoffsäuren wie Fluorwasserstoffsäure, Chlorwasserstoffsäure, Bromwasserstoffsäure oder Jodwasserstoffsäure oder Schwefelsäure, Phosphorsäure, Salpetersäure oder organischen Säuren wie Essigsäure, Trifluoressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure oder 1,2-Naphthalin-disulfonsäure.

In der Praxis setzt man vorteilhaft die reinen Wirkstoffe a), b) und c) ein, denen man auch weitere Wirkstoffe wie Insektizide, Akarizide, Nematizide, Herbizide, weitere Fungizide, Wachstumsregulatoren und/oder Düngemittel zufügen kann.

Die erfindungsgemäßen fungiziden Mischungen können beispielsweise in Form von direkt versprühbaren Lösungen, Pulvern, Suspensionen, auch hochprozentigen wäßrigen, öligen oder sonstigen Suspension oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feine Verteilung der erfindungsgemäßen Wirkstoffe gewährleisten.

Normalerweise werden die Pflanzen mit den Mischungen besprüht oder bestäubt oder die Samen der Pflanzen mit den Mischungen behandelt.

Die Formulierungen werden in bekannter Weise hergestellt, z.B. durch Verstrecken der Mischung mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmitteln als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkohol- sulfaten, sowie Salze sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Mischungen zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Verbindungen werden angewendet, indem man die Pilze oder die vor Pilzbefall zu schützenden Saatgüter, Pflanzen, Materialien oder den Erdboden mit einer fungizid wirksamen Menge der Mischungen behandelt.

Die Anwendung erfolgt vor oder nach der Infektion der Materialien, Pflanzen oder Samen durch die Pilze.

Speziell eignen sich die Mischungen zur Bekämpfung folgender Pflanzenkrankheiten:

Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Rhynchosporium an Getreide,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die neuen Mischungen können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen der erfindungsgemäßen Mischungen liegen je nach Art des gewünschten Effektes zwischen 0,01 und 3 kg Wirkstoffmischung pro ha.

Bei der Saatgutbehandlung werden im allgemeinen Aufwandmengen der Wirkstoffmischungen von 0,001 bis 50 g, vorzugsweise 0,01 bis 10 g je Kilogramm Saatgut benötigt.

Biologische Versuche

Beispiel 1

Eradikative Wirkung gegen Weizenmehltau

Weizenpflanzen der Sorte "Kanzler" wurden im 3-Blattstadium in einem Versuch mit triazolresistentem Weizenmehltau (Erysiphe graminis var. tritici) inokuliert und bei einem Pilzbefall von etwa 30 % mit den wäßrigen Wirkstoffaufbereitungen in den angegebenen Konzentrationen behandelt. Die Wassermenge entsprach 200 l/ha. Die Pflanzen wurden im Gewächshaus für 20 Tage bei 18 bis 22°C kultiviert. Danach erfolgte die Auswertung durch Feststellung der befallenen Blattfläche in Prozent. Diese Werte wurden in Wirkungsgrade umgerechnet. Die zu erwartenden Wirkungsgrade der Wirkstoffmischung wurden nach der Colby-Formel (Colby, S.R. "Calculating synergistic and antagonistic responses of herbicide combinations", Weeds, 15, S. 20-22, 1967) ermittelt und mit den beobachteten Wirkungsgraden verglichen.

Die Werte für die fungizide Wirkung schwanken zwischen den einzelnen Versuchen, weil die Pflanzen in den einzelnen Versuchen unterschiedlich starken Befall aufweisen und dadurch auch die Zahlenwerte der fungiziden Wirkung unterschiedlich ausfallen. Es können daher nur die Ergebnisse innerhalb desselben Versuchs miteinander verglichen werden.

$$\text{Colby-Formel } E = x + y - x \cdot y/100$$

E = zu erwartender Wirkungsgrad, ausgedrückt in % der unbehandelten Kontrolle, beim Einsatz der Wirkstoffe A und B in den Konzentrationen von m und n

x = der Wirkungsgrad, ausgedrückt in % der unbehandelten Kontrolle, beim Einsatz des Wirkstoffes A in einer Konzentration von m

y = der Wirkungsgrad, ausgedrückt in % der unbehandelten Kontrolle, beim Einsatz des Wirkstoffes B in einer Konzentration von n

Wirkstoff

I. α-Methoximino-2-[(2-methylphenoxy)-methyl]-phenyl-essigsäuremethylester

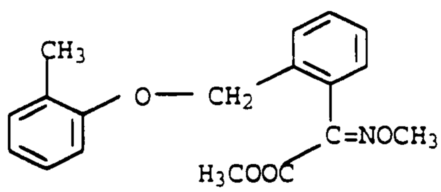

II. (±)-cis-4-[3-(4-tert-Butylphenyl)-2-methylpropyl]-2,6-dimethylmorpholin (Fenpropimorph)

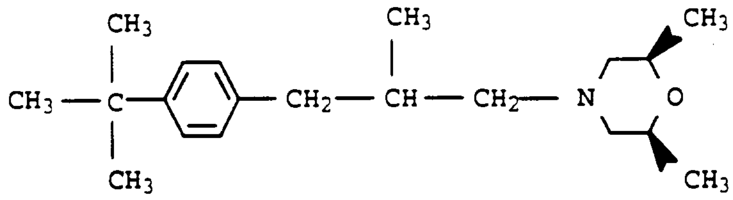

III. 2-(1,2,4-Triazol-1-ylmethyl)-2-(4-fluorphenyl)-3-(2-chlorphenyl)-oxiran (Epoxiconazol)

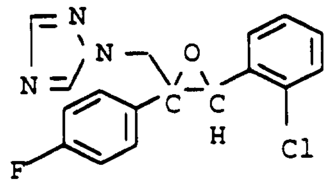

IV. 1-(N-Propyl-N-2-(2,4,6-trichlorophenoxy)ethylcarbamoyl)imidazol (Prochloraz)

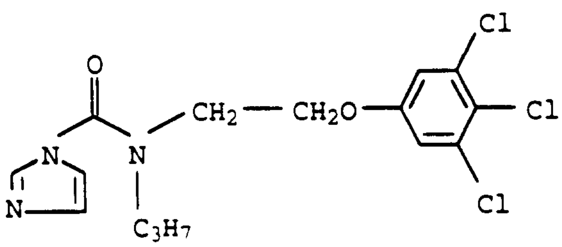

V. Wirkstoffkombination
Wirkstoff I
+ Fenpropimorph
105 : 210

VI. Wirkstoffkombination
Wirkstoff I
+ Epoxiconazol
1 : 1

VII. Wirkstoffkombination
Wirkstoff I
+ Prochloraz
1 : 1

VIII. Wirkstoffkombination
Fenpropimorph
+ Prochloraz
281 : 200

IX. Wirkstoffkombination
Fenpropimorph
+ Epoxiconazol
3 : 1

Tabelle 1

| Erysiphe graminis-Test (Weizen) eradikativ<br>Erysiphe graminis triazolresistent | | |
|---|---|---|
| Wirkstoff | Wirkstoffkonzentration in der Spritzbrühe in % | Wirkungsgrad in % der unbehandelten Kontrolle |
| Kontrolle (Unbehandelt) | - | 0 |
| I. Wirkstoff bekannt EP 253 213 | 0,05 | 50 |
| II. Wirkstoff bekannt Fenpropimorph, DE 2 656 747 | 0,05 | 47 |
| III. Wirkstoff bekannt Epoxiconazol | 0,05 | 26 |
| IV. Wirkstoff bekannt Prochloraz, EP 72 156 | 0,05 | 24 |
| V. Wirkstoffkombination bekannt<br>Wirkstoff I + Fenpropimorph EP 524 496 | 0,05 | 65 |
| VI. Wirkstoffkombination bekannt<br>Wirkstoff I + Epoxiconazol EP 531 837 | 0,05 | 52 |
| VII. Wirkstoffkombination bekannt<br>Wirkstoff I + Prochloraz EP 531 837 | 0,05 | 52 |
| VIII. Wirkstoffkombination bekannt<br>Fenpropimorph + Prochloraz | 0,05 | 48 |
| IX. Wirkstoffmischung bekannt<br>Fenpropimorph + Epoxiconazol EP 425 857 | 0,05 | 50 |

Erfindungsgemäße Mischung

| | | |
|---|---|---|
| I. + VIII. Mischungsverhältnis 1:3 | 0,01 + 0,03 | 58 |
| I. + IX. Mischungsverhältnis 1:3 | 0,01 + 0,03 | 62 |
| II. + VI. Mischungsverhältnis 1:3 | 0,01 + 0,03 | 61 |
| II. + VII. Mischungsverhältnis 1:3 | 0,01 + 0,03 | 59 |
| III. + V. Mischungsverhältnis 1:3 | 0,01 + 0,03 | 71 |
| IV. + V. Mischungsverhältnis 1:3 | 0,01 + 0,03 | 69 |

Das Ergebnis zeigt, daß 0,04 % (0,01 + 0,03) der Dreierwirkstoffmischungen eine bessere fungizide Wirkung aufweisen als 0,05 % der Einzelwirkstoffe und der Zweierwirkstoffmischungen.

Die gleiche Versuchsanstellung mit triazolsensiblem Erysiphe graminis durchgeführt, bestätigte das in Tabelle 1 dargestellte Versuchsergebnis.

Tabelle 2

| Erysiphe graminis-Test (Weizen) eradikativ<br>Erysiphe graminis triazolresistent | | |
|---|---|---|
| Wirkstoff | Wirkstoffkonzentration in der Spritzbrühe in % | Wirkungsgrad in % der unbehandelten Kontrolle |
| Kontrolle (Unbehandelt) | - | 0 |
| I. Wirkstoff bekannt | 0,1<br>0,01 | 55<br>29 |
| II. Wirkstoff bekannt Fenpropimorph | 0,1<br>0,01 | 52<br>25 |
| III. Wirkstoff bekannt Epoxiconazol | 0,1<br>0,01 | 36<br>10 |
| IV. Wirkstoff bekannt Prochloraz | 0,1<br>0,01 | 29<br>5 |
| V. Wirkstoffkombination bekannt<br>Wirkstoff I + Fenpropimorph | 0,1<br>0,01 | 83<br>55 |
| VI. Wirkstoffkombination bekannt<br>Wirkstoff I + Epoxiconazol | 0,1<br>0,01 | 67<br>38 |
| VII. Wirkstoffkombination bekannt<br>Wirkstoff I + Prochloraz | 0,1<br>0,01 | 65<br>34 |
| VIII. Wirkstoffkombination bekannt<br>Fenpropimorph + Prochloraz | 0,1<br>0,01 | 55<br>38 |
| IX. Wirkstoffmischung bekannt<br>Fenpropimorph + Epoxiconazol | 0,1<br>0,01 | 60<br>42 |

Erfindungsgemäße Mischung

| | beobachteter Wirkungsgrad | berechneter Wirkungsgrad*) |
|---|---|---|
| I. + VIII. 0,01 + 0,01 Mischungsverhältnis 1:1 | 69 | 55,98 |
| I. + VIII. 0,1 + 0,1 Mischungsverhältnis 1:1 | 93 | 79,75 |
| I. + VIII. 0,01 Mischungsverhältnis 10:1 | 81 | 72,10 |
| I. + VIII. 0,01 + 0,1 Mischungsverhältnis 1:10 | 73 | 60,05 |
| I. + IX. 0,01 + 0,01 Mischungsverhältnis 1:1 | 71 | 58,85 |
| I. + IX. 0,1 + 0,1 Mischungsverhältnis 1:1 | 100 | 82,00 |
| I. + IX. 0,1 + 0,01 Mischungsverhältnis 10:1 | 88 | 73,90 |
| I. + IX. 0,01 + 0,1 Mischungsverhältnis 1:10 | 83 | 71,60 |
| I. + VI. 0,01 + 0,01 Mischungsverhältnis 1:1 | 64 | 53,50 |
| I. + VI. 0,1 + 0,1 Mischungsverhältnis 1:1 | 100 | 84,16 |
| I. + VI. 0,1 + 0,01 Mischungsverhältnis 10:1 | 86 | 70,24 |
| I. + VI. 0,01 + 0,1 Mischungsverhältnis 1:10 | 88 | 75,25 |

*) berechnet nach der Colby-Formel

| | beobachteter Wirkungsgrad | berechneter Wirkungsgrad*) |
|---|---|---|
| I. + VII. 0,01 + 0,01 Mischungsverhältnis 1:1 | 62 | 50,50 |
| I. + VII. 0,1 + 0,1 Mischungsverhältnis 1:1 | 100 | 83,20 |
| I. + VII. 0,1 + 0,01 Mischungsverhältnis 10:1 | 83 | 68,32 |
| I. + VII. 0,01 + 0,1 Mischungsverhältnis 1:10 | 86 | 73,75 |
| III. + V. 0,01 + 0,01 Mischungsverhältnis 1:1 | 71 | 59,50 |
| III. + V. 0,1 + 0,1 Mischungsverhältnis 1:1 | 100 | 89,12 |
| III. + V. 0,1 + 0,01 Mischungsverhältnis 10:1 | 100 | 84,70 |
| III. + V. 0,01 + 0,1 Mischungsverhältnis 1:10 | 86 | 71,20 |
| IV. + V. 0,01 + 0,01 Mischungsverhältnis 1:1 | 69 | 57,25 |
| IV. + V. 0,1 + 0,1 Mischungsverhältnis 1:1 | 100 | 87,93 |
| IV. + V. 0,1 + 0,01 Mischungsverhältnis 10:1 | 83 | 68,05 |
| IV. + V. 0,01 + 0,1 Mischungsverhältnis 1:10 | 98 | 83,85 |

*) berechnet nach der Colby-Formel

In den vorliegenden Ergebnissen der verschiedenen Dreierwirkstoffmischungen liegen die beobachteten Wirkungsgrade immer über den nach der Colby-Formel berechneten Wirkungsgraden.

Die gleiche Versuchsanstellung mit triazolsensiblem Erysiphe graminis durchgeführt, bestätigte die in Tabelle 2 dargestellten Versuchsergebnisse.

**Patentansprüche**

1. Fungizides Mittel, enthaltend eine fungizid wirksame Menge einer Mischung aus

a) α-Methoximino-2-[(2-methylphenoxy)-methyl]-phenylessigsäuremethylester

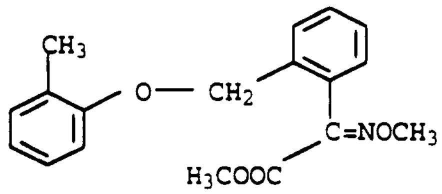

und

b) 4-(2-Methyl-3-[4-tertiärbutylphenyl]-propyl)-2,6-dimethylmorpholin (Fenpropimorph)

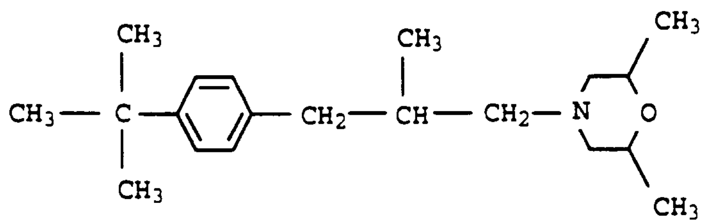

oder dem Wirkstoff Tridemorph oder dem Wirkstoff Fenpropidin
und

c) einem Azolwirkstoff ausgewählt aus der folgenden Gruppe
N-propyl-N-[2,4,6-trichlorophenoxy)ethyl]imidazol-1-carboxamid

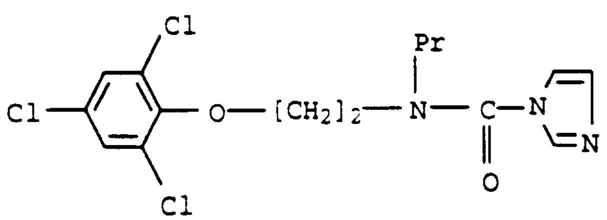

,

(Z)-2-(1,2,4-Triazol-1-ylmethyl)-2-(4-fluorphenyl)-3-(2-chlorphenyl)-oxiran der Formel

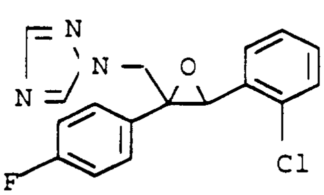

1-Butyl-1-(2,4-dichlorphenyl)-2-(1,2,4-triazol-1-yl)-ethanol (common name Hexaconazole), 1-[(2-Chlorphenyl)methyl]-1-(1,1-dimethyl)-2-(1,2,4-triazol-1-yl-ethanol, 1-(4-Fluorphenyl]-1-(2- fluorphenyl)-2-(1,2,4-triazol-1-yl)-ethanol (common name Flutriafol), (RS)-4-(4-Chlorphenyl)-2-phenyl-2-(1H-1,2,4-triazol-1-ylmethyl)-butyronitril, 1-[(2 RS, 4 RS; 2 RS, 4 SR)-4-Brom-2-(2,4-dichlorphenyl)-tetrahydrofurfuryl]-1H-1,2,4-triazol, 3-(2,4-Dichlorphenyl)-2-(1H-1,2,4-triazol-1-yl)-quinazolin-4(3H)-on, (RS)-2,2-Dimethyl- 3-(2-chlorbenzyl)-4-(1H-1,2,4-triazol-1-yl)-butan-3-ol, Bitertanol, Triadimefon, Triadimenol, Cyproconazole, Dichlobutrazol, Difenoconazole, Diniconazole, Etaconazole, Propiconazole, Flusilazole, Tebuconazole, Imazalil, Penconazole, Tetraconazole oder einem Salz eines solchen Azolwirkstoffs.

2. Verfahren zur Bekämpfung von Pilzen, dadurch gekennzeichnet, daß man eine fungizid wirksame Menge einer Mischung aus

a) α-Methoximino-2-[(2-methylphenoxy)-methyl]-phenylessigsäuremethylester

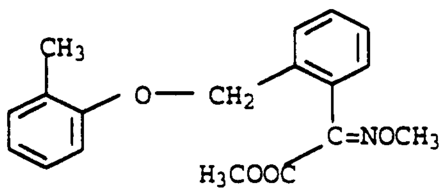

und

b) 4-(2-Methyl-3-[4-tertiärbutylphenyl]-propyl)-2,6-dimethylmorpholin

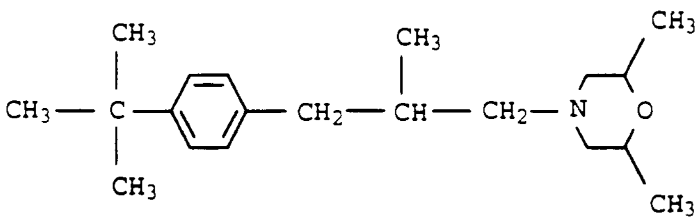

oder dem Wirkstoff Tridemorph oder dem Wirkstoff Fenpropidin
und

c) einem Azolwirkstoff ausgewählt aus der Gruppe
N-propyl-N-[2,4,6-trichlorophenoxy)ethyl]imidazol-1-carboxamid

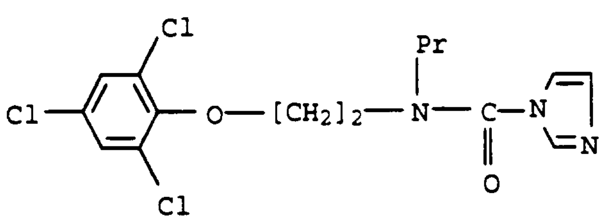 ,

(Z)-2-(1,2,4-Triazol-1-ylmethyl)-2-(4-fluorphenyl)-3-(2-chlorphenyl)-oxiran der Formel

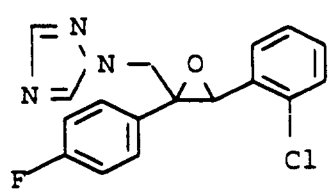

1-Butyl-1-(2,4-dichlorphenyl)-2-(1,2,4-triazol-1-yl)-ethanol (common name Hexaconazole), 1-[(2-Chlorphenyl)methyl]-1-(1,1-dimethyl)-2-(1,2,4-triazol-1-yl-ethanol, 1-(4-Fluorphenyl)-1-(2- fluorphenyl)-2-(1,2,4-triazol-1-yl)-ethanol (common name Flutriafol), (RS)-4-(4-Chlorphenyl)-2-phenyl-2-(1H-1,2,4-triazol-1-ylmethyl)-butyronitril, 1-[(2 RS, 4 RS; 2 RS, 4 SR)-4-Brom-2-(2,4-dichlorphenyl)-tetrahydrofurfuryl]-1H-1,2,4-triazol, 3-(2,4-Dichlorphenyl)-2-(1H-1,2,4-triazol-1-yl)-quinazolin-4(3H)-on, (RS)-2,2-Dimethyl- 3-(2-chlorbenzyl)-4-(1H-1,2,4-triazol-1-yl)-butan-3-ol, Bitertanol, Triadimefon, Triadimenol, Cyproconazole, Dichlobutrazol, Difenoconazole, Diniconazole, Etaconazole, Propiconazole, Flusilazole, Tebuconazole, Imazalil, Penconazole, Tetraconazole oder einem Salz eines solchen Azolwirkstoffs.

auf die Pilze oder auf die durch Pilzbefall bedrohten Materialien, Flächen, Pflanzen oder Saatgüter einwirken läßt.

**3.** Fungizid gemäß Anspruch 1, enthaltend die Verbindungen a), b) und c) in einer eine synergistische Fungizidwirkung erzeugenden Menge.

**4.** Fungizid gemäß Anspruch 1, enthaltend die Verbindungen a), b) und c) im Gewichtsverhältnis a : b : c wie 10 bis 1 : 10 bis 1 : 10 bis 1.

## Claims

**1.** A fungicide containing a fungicidal amount of a mixture of

a) methyl α-methoximino-2-[(2-methylphenoxy)-methyl]-phenylacetate

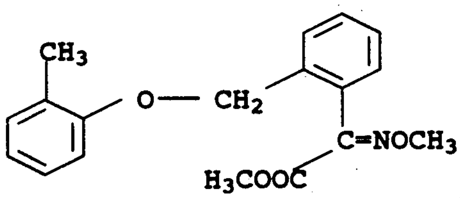

and

b) 4-(2-methyl-3-[4-tert-butylphenyl]-propyl)-2,6-dimethyl-morpholine (fenpropimorph)

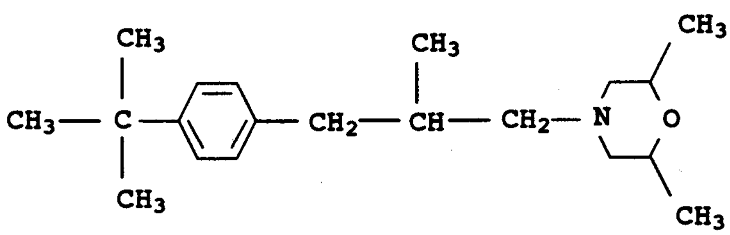

or the active ingredient tridemorph or the active ingredient fenpropidin
and

c) an azole active ingredient selected from the group consisting of
N-propyl-N-[(2,4,6-trichlorophenoxy)ethyl]imidazole-1-carboxamide

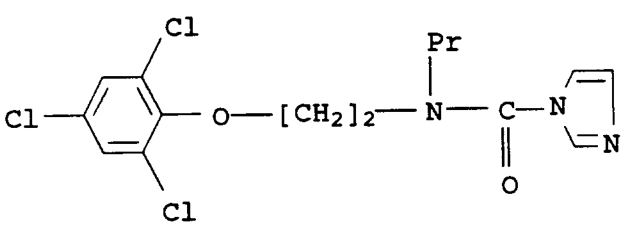

,

(Z)-2-(1,2,4-triazole-1-ylmethyl)-2-(4-fluorophenyl)-3-(2-chlorophenyl)-oxirane of the formula

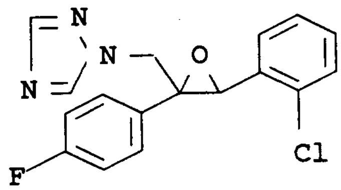

1-butyl-1-(2,4-dichlorophenyl)-2-(1,2,4-triazol-1-yl)-ethanol (common name hexaconazole), 1-[(2-chlorophenyl)methyl]-1-(1,1-dimethyl)-2-(1,2,4-triazol-1-yl)-ethanol, 1-(4-fluorophenyl)-1-(2-fluorophenyl)-2-(1,2,4-triazol-1-yl)-ethanol (common name flutriafol), (RS)-4-(4-chlorophenyl)-2-phenyl-2-(1H-1,2,4-triazol-1-ylmethyl)-butyronitrile, 1-[(2 RS, 4 RS; 2 RS, 4 SR)-4-bromo-2-(2,4-dichlorophenyl)-tetrahydrofurfuryl]-1H-1,2,4-triazol, 3-(2,4-dichlorophenyl)-2-(1H-1,2,4-triazol-1-yl)-quinazolin-4(3H)-one, (RS)-2,2-dimethyl-3-(2-chlorobenzyl)-4-(1H-1,2,4-triazol-1-yl)-butan-3-ol, bitertanol, triadimefon, triadimenol, cyproconazole, dichlobutrazole, difenoconazole, diniconazole, etaconazole, propiconazole, flusilazole, tebuconazole, imazalil, penconazole, tetraconazole or a salt of such an azole active ingredient.

**2.** A method for controlling fungi, wherein a fungicidal amount of a mixture of

a) methyl α-methoximino-2-[(2-methylphenoxy)-methyl]-phenylacetate

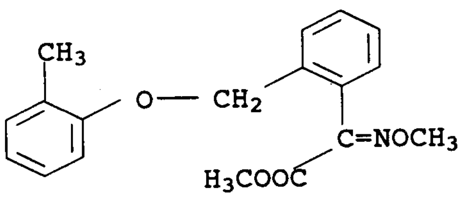

and

b) 4-(2-methyl-3-[4-tert-butylphenyl]-propyl)-2,6-dimethylmorpholine

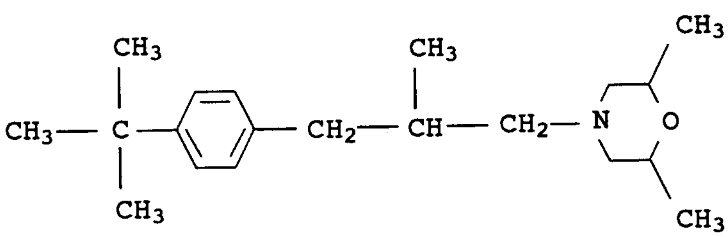

or the active ingredient tridemorph or the active ingredient fenpropidin
and

c) an azole active ingredient selected from the group consisting of
N-propyl-N-[(2,4,6-trichlorophenoxy)ethyl]imidazole-1-carboxamide

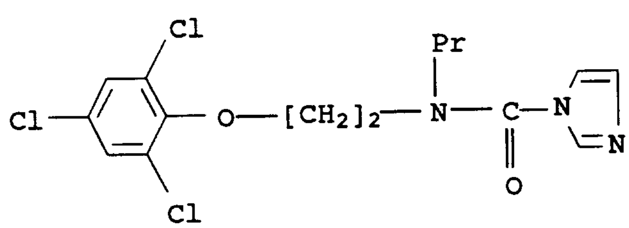

,

(Z)-2-(1,2,4-triazol-1-ylmethyl)-2-(4-fluorophenyl)-3-(2-chlorophenyl)-oxirane of the formula

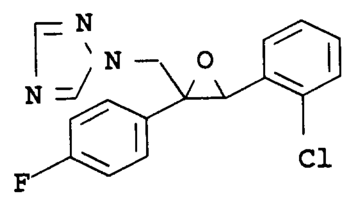

1-butyl-1-(2,4-dichlorophenyl)-2-(1,2,4-triazol-1-yl)-ethanol (common name hexaconazole), 1-[(2-chlorophenyl)methyl]-1-(1,1-dimethyl)-2-(1,2,4-triazol-1-yl)-ethanol, 1-(4-fluorophenyl)-1-(2-fluorophenyl)-2-(1,2,4-triazol-1-yl)ethanol (common name flutriafol), (RS)-4-(4-chlorophenyl)-2-phenyl-2-(1H-1,2,4-triazol-1-ylmethyl)-butyronitrile, 1-[(2 RS, 4 RS; 2 RS, 4 SR)-4-bromo-2-(2,4-dichlorophenyl)-tetrahydrofurfuryl]-1H-1,2,4-triazole, 3-(2,4-dichlorophenyl)-2-(1H-1,2,4-triazole-1-yl)-quinazolin-4(3H)-one, (RS)-2,2-dimethyl-3-(2-chlorobenzyl)-4-(1H-1,2,4-triazol-1-yl)-butan-3-ol, bitertanol, triadimefon, triadimenol, cyproconazole, dichlobutrazole, difenoconazole, diniconazole, etaconazole, propiconazole, flusilazole, tebuconazole, imazalil, penconazole, tetraconazole or a salt of such an azole active ingredient

is allowed to act on the fungi or on the materials, areas, plants or seeds threatened by fungal attack.

3. A fungicide as claimed in claim 1, containing the compounds a), b) and c) in an amount which produces a synergistic fungicidal action.

4. A fungicide as claimed in claim 1, containing the compounds a), b) and c) in a weight ratio a : b : c of 10 - 1 : 10 - 1 : 10 - 1.

**Revendications**

1. Produit fongicide contenant une quantité fongicide efficace d'un mélange de

a) l'α-méthoximino-2-[(2-méthylphénoxy)méthyl]phénylacétate de méthyle

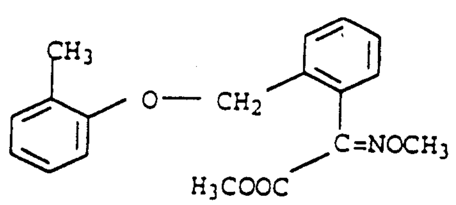

b) la 4-(2-méthyl-3-[4-tert-butylphényl]propyl)-2,6-diméthylmorpholine(Fenpropimorph)

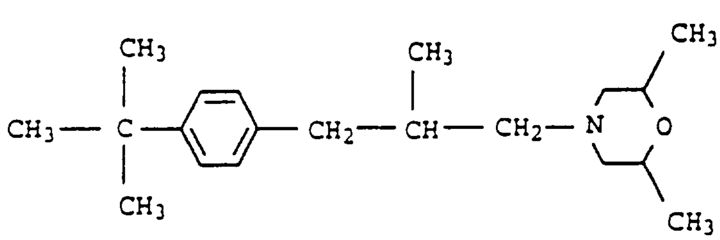

ou la substance active Tridemorph ou la substance active Fenpropidin
et

c) une substance active azolique choisie dans le groupe suivant :
N-propyl-N-[2,4,6-trichlorophénoxy)éthyl]imidazole-1-carboxamide

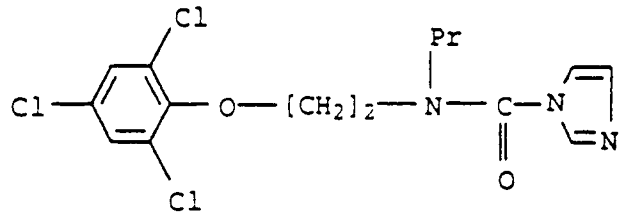

(Z)-2-(1,2,4-triazole-1-ylméthyl)-2-(4-fluorophényl)-3-(2-chlorophényl)-oxiranne de formule

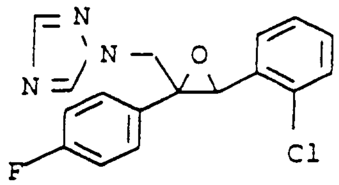

1-butyl-1-(2-,4-dichlorophényl)-2-(1,2,4-triazole-1-yl)-éthanol (nom commun hexaconazole), 1-[(2-chlorophényl)méthyl)-1-(1,1-diméthyl)-2-(1,2,4-triazole-1-yl-éthanol, 1-(4-fluorophényl)-1-(2-fluorophényl)-2-(1,2,4-triazole-1-yl)-éthanol (non commun flutriafol), (RS)-4-(4-chlorophényl)-2-phényl-2-(1H-1,2,4-triazole-1-ylméthyl)-butyronitrile, 1-[(2 RS, 4 RS ; 2 RS, 4 SR)-4-bromo-2-(2,4-dichlorophényl)-tétrahydrofurfuryl]-1H-1,2,4-triazole, 3-(2,4-dichlorophényl)-2-(1H-1,2,4-triazole-1-yl)-quinazoline-4(3H)-one, (RS)-2,2-diméthyl-3-(2-chlorobenzyl)-4-(1H-1,2,4-triazole-1-yl)-butane-3-ol, bitertanol, triadimefon, Triadimenol, Cyproconazole, Dichlobutrazol, Difénoconazole, Diniconazole, Etaconazole, Propiconazole, Flusilazole, Tébuconazole, Imazalil, Penconazole, Tétraconazole,

ou un sel d'une telle substance active azolique.

2. Procédé pour combattre les mycètes, caractérisé par le fait que l'on fait agir sur les mycètes ou sur les matières, surfaces, végétaux ou semences menacés d'une attaque par les mycètes, une quantité fongicide efficace d'un mélange de

a) l'α-méthoximino-2-[(2-méthylphénoxy)méthyl]phénylacétate de méthyle

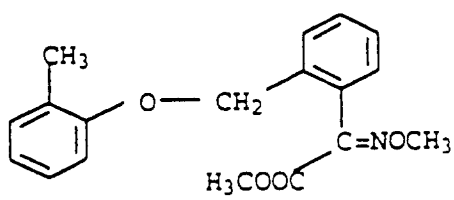

b) la 4-(2-méthyl-3-[4-tert-butylphényl]propyl)-2,6-diméthylmorpholine(Fenpropimorph)

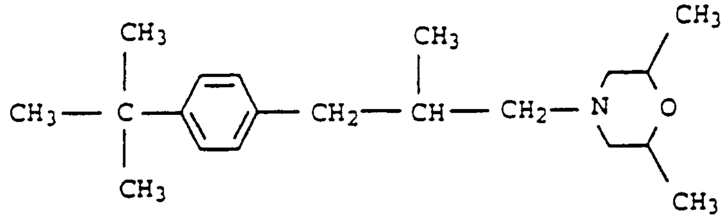

ou la substance active Tridemorph ou la substance active Fenpropidin
et

c) une substance active azolique choisie dans le groupe suivant :
N-propyl-N-[2,4,6-trichlorophénoxy)éthyl]imidazole-1-carboxamide

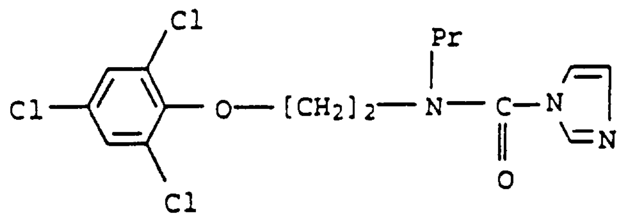

(Z)-2-(1,2,4-triazole-1-ylméthyl)-2-(4-fluorophényl)-3-(2-chlorophényl)-oxiranne de formule

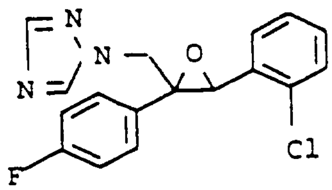

1-butyl-1-(2-,4-dichlorophényl)-2-(1,2,4-triazole-1-yl)-éthanol (nom commun hexaconazole), 1-[(2-chlorophényl)méthyl)-1-(1,1-diméthyl)-2-(1,2,4-triazole-1-yl-éthanol, 1-(4-fluorophényl)-1-(2-fluorophényl)-2-(1,2,4-triazole-1-yl)-éthanol (non commun flutriafol), (RS)-4-(4-chlorophényl)-2-phényl-2-(1H-1,2,4-triazole-1-ylméthyl)-butyronitrile, 1-[(2 RS, 4 RS ; 2 RS, 4 SR)-4-bromo-2-(2,4-dichlorophényl)-tétrahydrofurfuryl]-1H-1,2,4-triazole, 3-(2,4-dichlorophényl)-2-(1H-1,2,4-triazole-1-yl)-quinazoline-4(3H)-one, (RS)-2,2-diméthyl-3-(2-chlorobenzyl)-4-(1H-1,2,4-triazole-1-yl)-butane-3-ol, Bitertanol, Triadimefon, Triadimenol, Cyproconazole, Dichlobutrazol, Difénoconazole, Diniconazole, Etaconazole, Propiconazole, Flusilazole, Tébuconazole, Imazalil, Penconazole, Tétraconazole,

ou un sel d'une telle substance active azolique.

**3.** Produit fongicide selon la revendication 1, contenant les composés a), b) et c) en quantités conduisant à une activité fongicide synergique.

**4.** Produit fongicide selon la revendication 1, contenant les composés a), b) et c) dans des proportions relatives en poids a/b/c/ de 10 à 1 : 10 à 1 : 10 à 1.